# FASCICULE DE BREVET EUROPEEN

(11) **EP 3 999 731 B1**
(45) Date de publication et mention de la délivrance du brevet: **24.05.2023**
(21) Numéro de dépôt: 20708124.1
(22) Date de dépôt: 10.03.2020
(51) Int. Cl.: F02M 35/10, F02B 29/04

(54) **REPARTITEUR AVEC SEPARATION DE FLUX SEMI INTEGREE**
VERTEILER MIT HALBINTEGRIERTER STRÖMUNGSTRENNUNG
DISTRIBUTOR WITH SEMI-INTEGRATED FLOW SEPARATION

(30) Priorité: 17.07.2019 FR 1908037
(43) Date de publication de la demande: 25.05.2022
(73) Titulaire: Renault s.a.s, 92100 Boulogne Billancourt (FR)
(72) Inventeur: MILLON, Jean-Pierre, 78870 Bailly (FR); POMMERY, William, 95560 Montsoult (FR)
(74) Mandataire: Renault Group
(86) Numéro de dépôt international: PCT/EP2020/056379
(87) Numéro de publication internationale: WO 2021/008738

(56) Documents cités:
- EP-A1- 3 306 048
- WO-A1-2009/068487
- FR-A1- 2 898 644
- US-A1- 2003 010 310
- US-A1- 2012 255 513

## Description

### Domaine technique de l'invention

La présente invention concerne un moteur à combustion interne.

La présente invention concerne également un véhicule automobile équipé d'un moteur thermique avec un dispositif d'injection indirecte de gaz ou de carburant dans un circuit d'admission d'air dudit moteur.

La présente invention concerne plus particulièrement un agencement de la fixation d'un répartiteur d'air d'admission contre une culasse de moteur thermique.

### Etat de la technique

Un véhicule automobile connait de plus en plus de contraintes de réduction d'encombrement de ses équipements pour des raisons d'esthétique ou de confort des passagers. En particulier, le véhicule équipé d'un moteur thermique appelé aussi à combustion interne comporte un compartiment moteur dans lequel est logé un groupe motopropulseur comprenant le moteur et ses éléments ou accessoires, dont les dimensions sont de plus en plus réduites entraînant des recherches d'améliorations en termes de compacité du moteur et de ses éléments ou accessoires.

Ainsi il est prévu d'optimiser l'espace du compartiment moteur d'une part en réduisant le volume du moteur et de ses éléments ou accessoires et d'autre part en agençant de façon astucieuse le moteur et les accessoires entre eux.

Un moteur thermique comprend de manière connue un carter-cylindres sur lequel est monté une culasse. Dans ladite culasse sont creusés des conduits d'admission d'air qui mènent à des cylindres. La culasse présente une face dite « admission » contre laquelle est fixé un répartiteur d'admission apte à diriger de l'air ou des gaz d'amission vers les conduits d'admission creusés dans la culasse et connectés avec les cylindres, et une face dite « échappement » contre laquelle est fixé un collecteur d'échappement pour récupérer les gaz brûlés issus de la combustion dans les cylindres du moteur.

L'air et/ou les gaz d'admission sont dirigés vers le répartiteur d'admission en ayant été au préalable compressés au passage d'un compresseur qui est par exemple l'étage de compression d'un turbocompresseur. Afin d'améliorer l'efficacité et le rendement du moteur, l'air d'admission est refroidi avant son admission dans les cylindres du moteur. Ainsi un étage de refroidisseur est installé dans le circuit d'admission d'air en amont de la culasse selon le sens de circulation de l'air d'admission. Cet étage de refroidisseur comprend par exemple un échangeur air/eau par lequel l'air compressé chaud cède une partie de sa chaleur à de l'eau ou à un liquide de refroidissement. L'échangeur de chaleur est logé dans un carter qui est prolongé en aval par une bride de fixation selon le sens de circulation de l'air d'admission, formant une chambre avec par exemple un renfoncement de la culasse. Ladite chambre est partie d'un plénum de répartiteur d'admission.

Pour réduire le poids du moteur, le carter est fixé contre la face d'admission de la culasse grâce à la bride. La fixation de ce carter doit répondre à des contraintes mécaniques fortes qui nécessitent des pièces de grande rigidité en matériau métallique comme de l'acier ou d'alliage d'acier ou d'alliage d'aluminium ou de plastique technique.

De plus, pour optimiser l'occupation de l'espace du compartiment moteur, ledit carter est fixé selon une direction oblique par rapport à la face d'admission de la culasse. Ladite face d'admission s'étend sensiblement selon un plan vertical.

Les moteurs à injection indirecte de carburant liquide ou de gaz comportent un conduit d'injection de carburant liquide ou de gaz dans le circuit d'admission d'air. L'injection est généralement effectuée en amont des cylindres du moteur dans des conduits d'admission d'air creusés dans la culasse.

Ainsi des conduits d'injection de carburant ou de gaz sont percés depuis une face d'admission de la culasse pour déboucher de façon oblique dans un canal d'admission d'air. Le carburant est ainsi mélangé avec l'air d'admission avant son introduction dans une chambre de combustion à l'ouverture d'un accès contrôlé par une soupape d'admission. Ladite chambre à combustion est délimitée par la paroi longitudinale du cylindre, un piston et une paroi inférieure de la culasse.

Les gaz brûlés dans ladite chambre sont expulsés via des conduits d'échappement vers un circuit d'échappement, L'accès des conduits d'échappement est contrôlé par une soupape d'échappement.

Les ouvertures et fermetures des accès des conduits d'admission et d'échappement peuvent entraîner des refoulements des flux d'air à l'admission. Lesdits refoulements sont connus sous le nom de « back-flow » en anglais. Lesdits refoulements ne concernent pas l'ensemble des conduits d'admission en même temps et peuvent se produire de manière aléatoire dans une des conduits d'admission.

La publication FR2884875-A1 propose un conduit de balayage débouchant dans la chambre à combustion et connecté au circuit d'admission d'air et contrôlé par une soupape de balayage agencée en amont selon le sens de circulation de l'air d'admission. Les documents EP3306048A1 et US2112/255513A1 décrivent des unités de refroidissement de tubulure d'admission pertinentes pour la définition de la présente invention.

Un inconvénient concerne le système d'ouverture de la soupape de balayage et son agencement.

Le but de l'invention de remédier à ces problèmes et l'objet de l'invention est un agencement de fixation d'un échangeur de chaleur à une paroi d'admission d'une culasse de moteur thermique avec une injection indirecte de carburant ou de gaz, ledit échangeur est connecté en amont à un circuit d'admission d'air et en aval à des conduits d'admission creusés dans la culasse, ledit agencement permet une isolation aéraulique de chacun des conduits d'admission et de contenir les refoulements de gaz à l'admission.

### Présentation de l'invention

La présente invention concerne un agencement de fixation d'un circuit d'admission d'air à une paroi d'admission d'une culasse d'un moteur thermique à injection indirecte de carburant.

La présente injection concerne plus particulièrement un agencement de fixation de circuit d'admission d'air de moteur thermique à injection indirecte de carburant comprenant une culasse dans laquelle sont creusés des conduits tubulaires d'admission qui débouchent d'un côté dans un enfoncement de la paroi d'admission de la culasse et du côté opposé dans une chambre à combustion délimitée par un cylindre, un piston et la paroi inférieure de la culasse, ladite culasse comprenant au moins un canal d'injection par cylindre apte à loger un injecteur de carburant et débouchant de façon oblique dans un canal d'admission,

Ledit circuit d'admission comportant un échangeur de chaleur fixé à la paroi d'admission de la culasse,

caractérisé en ce que l'enfoncement de la culasse est divisé en cavités par au-moins une paroi de séparation issue de matière avec la culasse et s'étendant depuis la surface d'enfoncement vers l'extérieur de la culasse, de manière qu'une chambre à combustion communique avec une unique cavité, et en ce que l'échangeur est divisé en compartiments longitudinaux, chacun desdits compartiments est connecté avec une unique cavité de la culasse dans le prolongement axial du compartiment.

De manière générale, l'enfoncement de la culasse recouverte par la bride de fixation et l'échangeur de chaleur forme une chambre d'admission d'air dans le moteur appelée plénum d'admission.

De manière avantageuse, cette chambre est divisée en au moins une cavité par au-moins une paroi de séparation issue de matière avec la culasse et qui s'étend depuis la surface de l'enfoncement vers l'extérieur de la culasse, qui communique avec une seule chambre à combustion spécifique, de même l'échangeur est divisé en au-moins un compartiment longitudinal, chacun des compartiments longitudinaux est connecté avec une unique cavité et donc avec une unique chambre à combustion distincte. On obtient ainsi un flux d'air distinct par poste ou par chambre à combustion afin d'isoler le risque de refoulement par poste et ne pas impacter les postes voisins.

Selon d'autres caractéristiques de l'invention :
- l'échangeur est fixé à la culasse par une bride de fixation comportant une section de passage d'air délimitée par une paroi supérieure et une paroi inférieure reliée l'une à l'autre par des parois latérales sensiblement orthogonales auxdites parois supérieure et inférieure, et divisée en cellules de passage, chacune desdites cellules reliant un unique compartiment longitudinal de l'échangeur à un unique renfoncement de la culasse.

De manière avantageuse, la bride de fixation comporte une section de passage d'air qui est divisée en au-moins une cellule de passage, chacune desdites au-moins une cellule de passage est isolée aérauliquement et relie un unique compartiment longitudinal distinct à une unique cavité distincte de la culasse pour former une continuité du flux d'air. Le passage est continu et sensiblement rectiligne. Ladite cellule est dans le prolongement axial du compartiment longitudinal de l'échangeur et de la cavité

La section de passage d'air de la bride est délimitée par une paroi supérieure, une paroi inférieure en vis-à-vis reliées l'une à l'autre par des parois latérales orthogonales auxdites parois supérieure et inférieure. Lesdites parois latérales sont sensiblement planes et en forme de trapèze pour définir une fixation inclinée de l'échangeur par rapport à la face d'admission de la culasse plane et verticale.

De manière avantageuse, la section de passage transversale orthogonale à la direction d'écoulement du flux d'air, ladite section est partagée en cellules de passage isolées l'une de l'autre par des parois de séparation et chacune des cellules reliant un unique compartiment longitudinal à une unique cavité dans la culasse.
- les bordures amont et les bordures aval des cellules de passage sont entourées par un joint.

De manière avantageuse, un joint périphérique est installé entre la culasse et la bride de fixation pour former une étanchéité aéraulique de passage pour le flux d'air traversant la cellule de passage de la bride de fixation et la cavité de la culasse.
- la bride de fixation comprend un orifice traversant une paroi d'appui de ladite bride contre la paroi d'admission de la culasse, ledit orifice est en vis-à-vis avec le conduit d'injection de la culasse et apte à loger un injecteur.

De manière avantageuse, la bride de fixation comporte un orifice traversant une paroi d'appui de ladite bride contre la paroi d'admission de la culasse, ledit orifice est en vis-à-vis avec le conduit d'injection percé dans la culasse, afin de faciliter la mise en place de l'injecteur de carburant.
- le canal d'admission et la cavité dans la culasse, la cellule de passage de la bride de fixation, le conduit longitudinal de l'échangeur forment un conduit d'admission d'air isolé aérauliquement et connecté à une unique chambre à combustion.

De manière avantageuse, le canal d'admission et la cavité dans la culasse ainsi que la cellule de passage de la bride et le conduit longitudinal de l'échangeur forment un passage d'un flux d'air selon un axe sensiblement rectiligne depuis l'entrée amont de l'échangeur jusqu'à une extrémité amont du conduit d'admission percé dans la culasse, ledit passage étant isolé aérauliquement des autres passages voisins.
- le compartiment longitudinal de l'échangeur est prolongé en amont par des parois de bornage entourant l'entrée dudit compartiment.

De manière avantageuse, le compartiment longitudinal de l'échangeur est prolongé en amont selon le sens d'écoulement de l'air par des parois de bornage pour accroître la longueur du conduit d'admission.
- lesdites parois de bornage forment une bride d'entrée de l'échangeur fixée contre ledit échangeur.

De manière avantageuse, les parois e bornage forment une pièce rapportée fixée en amont de l'échangeur.
- les parois de bornage sont partie d'une corne d'entrée de gaz d'admission dans l'échangeur.

De manière avantageuse, les parois de bornage sont partie d'une corne d'entrée recouvrant la partie amont de l'échangeur pour faciliter l'assemblage du circuit d'admission d'air.
- le conduit d'admission et la cavité dans la culasse, la cellule de passage de la bride de fixation, le conduit longitudinal de l'échangeur et les parois de bornage forment un conduit d'admission isolé aérauliquement et connecté à une unique chambre à combustion.

De manière avantageuse, le conduit d'admission d'air est donc formé par la succession d'amont en aval des parois de bornage, du compartiment longitudinal de l'échangeur, de la cellule de passage de la bride de fixation, de la cavité et du canal d'admission dans la culasse, augmentant ainsi la longueur du conduit d'admission.
- la distance entre l'intersection de l'axe du conduit d'injection avec l'axe médian du conduit d'admission, et l'extrémité amont du conduit d'admission est supérieure à un seuil de longueur.

De manière avantageuse, la longueur du conduit d'admission est supérieure à un seuil de longueur pour atténuer les effets d'un reflux de gaz et en concerner qu'un seul conduit d'admission.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[fig.1] est une vue schématique de circuit d'admission d'air fixé à une culasse de moteur.
[fig.2] est une vue schématique de coupe transversale d'une culasse avec une fixation de l'échangeur selon l'invention.
[fig.3] est une vue schématique de la culasse avec une bride de fixation de l'échangeur selon l'invention.
[fig.4] est une vue schématique d'un échangeur selon l'invention.

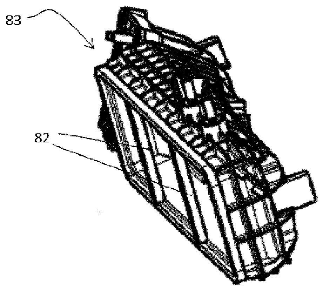

[fig.5] est une vue schématique d'une corne d'entrée d'échangeur selon l'invention.

### Description détaillée des figures

Dans la description qui va suivre, des chiffres de référence identiques désignent des pièces identiques ou ayant des fonctions similaires.

On désigne par axe vertical un axe orthogonal au plan inférieur de contact de la culasse avec un carter-cylindre, l'axe étant tourné vers le haut à l'opposé du carter-cylindre.

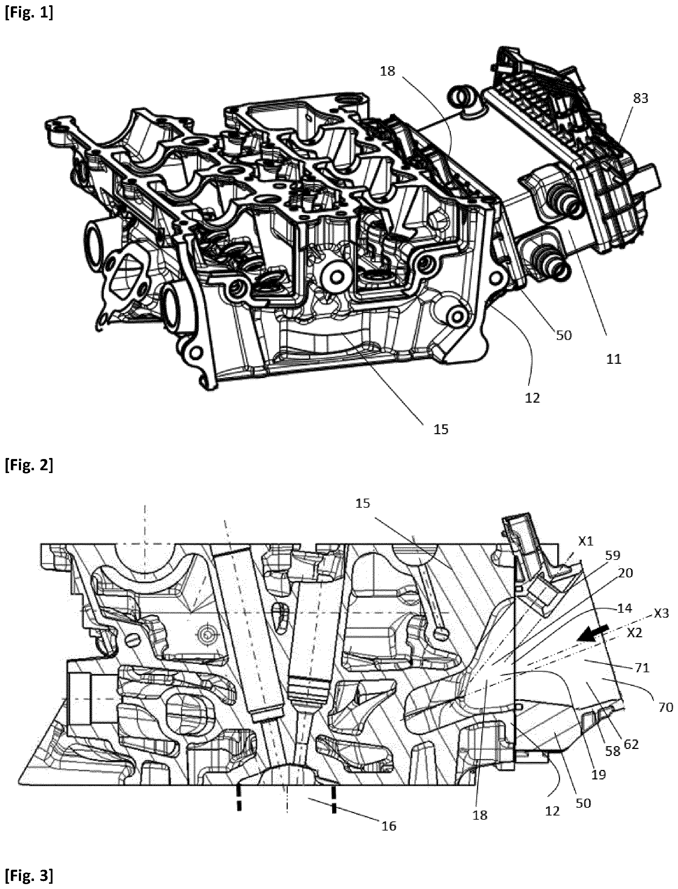

De manière connue, un moteur thermique de véhicule est alimenté en air par un circuit d'admission. Ainsi de l'air est capté depuis la face avant du véhicule et conduit jusqu'à une paroi d'admission du moteur, notamment d'une culasse dudit moteur. L'air peut passer par exemple par un filtre à air, par un étage de compression qui peut-être un compresseur d'un turbo-compresseur. Comme représenté en figure 1, l'air d'admission est ensuite refroidi pour assurer une meilleure efficacité du moteur, en passant par un échangeur de chaleur 11 généralement de type eau/air par lequel l'air transfère une partie de sa chaleur à un liquide de refroidissement à base d'eau. En sortie de l'échangeur, l'air est amené dans un répartiteur d'admission 14 qui est fixé contre la paroi d'admission 12 de la culasse 15 du moteur. Le répartiteur 14 comprend un plénum ou chambre de répartition connecté à des chambres de combustion 16 du moteur via des canaux d'admission 17 creusés dans la culasse. Chacune desdites chambres de combustion est délimitée par un cylindre creusé dans un carter-cylindres, un piston qui est mobile en coulissement selon l'axe du cylindre et une face inférieure de la culasse.

On connait les moteurs thermiques à injection direction dans lesquels un injecteur de carburant pulvérise du carburant directement dans la chambre à combustion 16. Ce type de moteur nécessite un injecteur de carburant de forte puissance pour faire face aux pressions élevées dans la chambre à combustion.

On connait les moteurs thermiques à injection indirecte dans lesquels un injecteur injecte du carburant dans le circuit d'admission d'air en amont selon le sens de circulation d'air de la chambre à combustion. Le carburant n'est pas injecté dans le cylindre mais en amont, dans un canal d'admission 17 ou dans le répartiteur 14 pour que le tout se mélange de manière homogène. Cela permet d'avoir une meilleure combustion et donc moins de particules fines qui est un des problèmes des moteurs modernes. Le carburant se vaporise sous l'effet de la chaleur et brûle de manière optimale une fois arrivé dans la chambre de combustion.

Notre invention concerne un moteur thermique à injection indirecte. Le carburant est injecté par un injecteur dans un canal d'admission d'air 17, plus précisément, l'injecteur est logé dans un conduit d'injection qui débouche dans un canal d'admission 17 d'air de la culasse. L'axe du canal d'injection X1 est oblique par rapport à l'axe du canal d'admission X2 notamment à leur intersection.

Selon l'invention, le plénum est formé par un enfoncement 20 de la paroi d'admission de la culasse recouvert par le répartiteur d'admission 14. Les canaux d'admission creusés dans la culasse débouchent donc dans l'enfoncement 20 comme représenté en figure 2.

Ledit enfoncement 20 est divisé par au-moins une paroi de séparation 18, en au-moins une cavité d'admission 19. Chacune des cavités 19 est connectée à une unique chambre de combustion 16 par les canaux d'admission 17, et ladite chambre à combustion n'est connectée qu'à une seule cavité d'admission 19. De façon claire, le couple (cavité d'admission, chambre à combustion) est unique.

La paroi de séparation 18 est issue de matière avec la culasse 15 et s'étend depuis la surface de l'enfoncement 20 de la culasse vers l'extérieur, parallèlement à un plan formé par l'axe d'écoulement de l'air d'admission X3 et un axe vertical Z. La direction d'écoulement d'air est désignée par une flèche. De manière préférentielle, l'axe X3 est parallèle à l'axe X2.

L'échangeur de chaleur 11 est fixé contre la paroi d'admission 12 de la culasse 15 par une bride de fixation 50. Ladite bride de fixation 50 entoure une section de passage 57 d'air sensiblement rectangulaire délimitée par une paroi inférieure 58, une paroi supérieure 59 en vis-à-vis avec la paroi inférieure et deux parois latérales 60 orthogonales auxdites parois inférieure 58 et supérieure 59. Les parois latérales 60 sont en forme de trapèze pour permettre une fixation oblique de l'échangeur de chaleur 11 à la paroi verticale 12 d'admission de la culasse 15. La bride comprend un trottoir 61 périphérique de fixation qui est en appui contre la paroi d'admission 12 de la culasse. Dans le trottoir de fixation 61 sont aménagés des orifices traversant pour recevoir des vis de fixation qui sont enfoncées dans la paroi d'admission 12 de la culasse. La bride comprend des cloisons intérieures 62 de séparation sensiblement parallèles aux parois latérales 60, lesdites cloisons 62 sont dans le prolongement des parois de séparation 18 dans l'enfoncement 20 de la culasse.

Les cloisons intérieures de séparation 62 de la bride de fixation divisent l'espace de passage d'air 70 en cellules de passage 71, chacune desdites cellules 71 est connectée à une unique cavité 19 d'admission de la culasse et donc à une unique chambre de combustion 16. Plus précisément la cavité d'admission 19 de la culasse est dans le prolongement sensiblement de façon rectiligne de la cellule de passage 71 de la bride de fixation 50.

De manière préférentielle, un joint d'étanchéité aéraulique est disposé d'une part entre la bride de fixation (50) et la paroi d'admission (12) de la culasse (15). Plus précisément, les bordures amont et les bordures aval des cellules de passage (71) sont entourées par un joint aéraulique (non présenté) pour assurer une étanchéité aéraulique au passage de la bride (50).

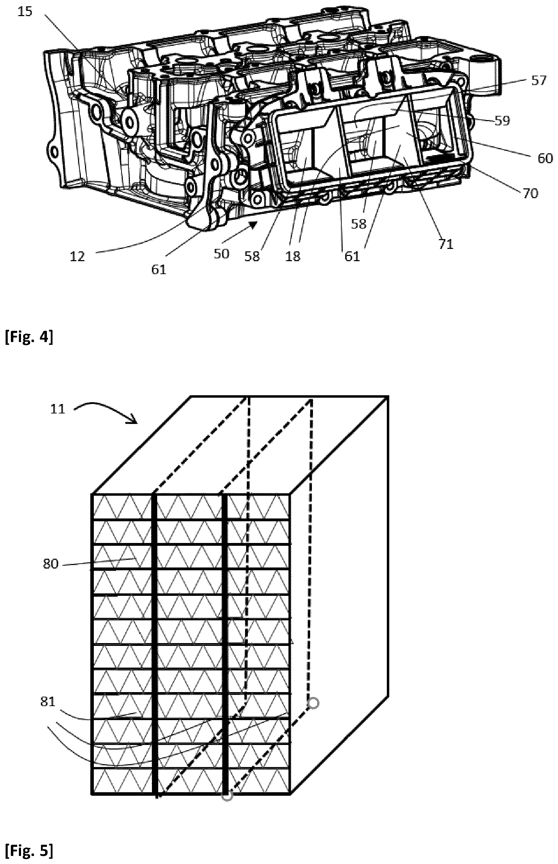

L'échangeur de chaleur 11 est fixé à la bride de fixation 50 du côté opposé à la culasse par exemple par clipsage. L'échangeur de chaleur est formé par une multitude de conduits longitudinaux 80 de passage d'air qui s'étendent parallèlement à l'axe d'écoulement de l'air X3 selon la figure 4.

Selon l'invention, l'échangeur de chaleur est divisé en compartiments longitudinaux 81, par exemple en affectant un nombre de conduits longitudinaux 80 par compartiment. On peut par exemple agencer une cloison qui s'étend selon l'axe dudit échangeur en amont ou en aval de l'échangeur pour partager le nombre de conduits longitudinaux 80 en compartiments longitudinaux 81.

De manière préférentielle, chaque compartiment longitudinal 81 débouche dans une unique cellule de passage 71 de la bride de fixation 50. Ainsi le compartiment longitudinal de l'échangeur 81 avec la cellule de passage 71 associée de la bride de fixation, la cavité d'admission 19 connectée à ladite cellule de passage et le canal d'admission d'air 17 dans la culasse forment un conduit d'admission isolé aérauliquement notamment des autres conduits d'admission voisins, et connecté à une unique chambre de combustion 16.

Selon un mode de réalisation, chacun des compartiments longitudinaux 81 peut être prolongé en amont par une paroi de bornage 82 pour délimiter la section de passage d'air dudit compartiment. Ladite paroi de bornage entoure donc la section d'entrée vers ledit compartiment. La hauteur de la paroi de bornage 82 peut être fixée pour pallier les problèmes de refoulement de gaz dans le conduit d'admission. Le conduit d'admission est alors composé successivement des éléments qui sont la paroi de bornage 82, le compartiment longitudinal de l'échangeur 81, la cellule de passage de la bride de fixation 71, la cavité d'admission 19 de la culasse et le canal d'admission 17 de la culasse, pour amener l'air d'admission depuis la corne d'entrée jusqu'à la chambre de combustion en assurant une isolation aéraulique.

La paroi de bornage peut être fixée à l'échangeur de chaleur par exemple par clipsage.

Selon un autre mode de réalisation, la paroi de bornage est partie d'une corne d'entrée 83 recouvrant l'entrée globale de l'échangeur pour faciliter l'assemblage du circuit d'admission d'air.

Pour atténuer les effets du refoulement de gaz dans le conduit d'admission, il est connu de disposer d'une longueur de conduit d'admission supérieure à un seuil de longueur dépendant des caractéristiques du moteur et de la chambre à combustion, ladite longueur est délimitée en aval par le point d'intersection de l'axe du conduit d'injection avec l'axe médian du canal d'admission. Ledit seuil de longueur est de l'ordre de 100 mm, dans une plage comprise entre 70 et 140 mm pour certains moteurs thermiques connus.

Selon l'invention, la distance entre l'intersection de l'axe du conduit d'injection avec l'axe médian du canal d'admission, et l'extrémité amont du conduit d'admission est supérieure à un seuil de longueur.

### L'objectif est atteint :

Le conduit d'admission formé des différents éléments du circuit d'admission permet d'amener de l'air d'admission

Comme il va de soi, l'invention ne se limite pas aux seules formes d'exécution de cette prise, décrites ci-dessus à titre d'exemples, elle en embrasse au contraire toutes les variantes.

## Revendications

1. Agencement de fixation de circuit d'admission d'air de moteur thermique à injection indirecte de carburant comprenant une culasse (15) dans laquelle sont creusés des canaux d'admission (17) qui débouchent d'un côté dans un enfoncement (20) de la paroi d'admission (12) de la culasse et du côté opposé dans une chambre à combustion (16) délimitée par un cylindre, un piston et la paroi inférieure de la culasse, ladite culasse comprenant au moins un conduit d'injection par cylindre apte à loger un injecteur de carburant et débouchant de façon oblique dans un canal d'admission (17),
Ledit circuit d'admission comportant un échangeur de chaleur (11) fixé à la paroi d'admission de la culasse,
**caractérisé en ce que** l'enfoncement (20) de la culasse est divisé en cavités (19) par au-moins une paroi de séparation (18) issue de matière avec la culasse (15) et s'étendant depuis la surface d'enfoncement vers l'extérieur de la culasse, de manière qu'une chambre à combustion (16) communique avec une unique cavité (19), et **en ce que** l'échangeur est divisé en compartiments longitudinaux (81), chacun desdits compartiments est connecté avec une unique cavité (19) de la culasse dans le prolongement axial du compartiment.

2. Agencement selon la revendication 1, **caractérisé en ce que** l'échangeur (11) est fixé à la culasse par une bride de fixation (50) comportant une section de passage d'air délimitée par une paroi supérieure (59) et une paroi inférieure (58) reliée l'une à l'autre par des parois latérales (60) sensiblement orthogonales auxdites parois supérieure et inférieure, et divisée en cellules de passage (71), chacune desdites cellules reliant un unique compartiment longitudinal (81) de l'échangeur à une unique cavité (19) de la culasse.

3. Agencement selon la revendication 2, **caractérisé en ce que** les bordures amont et les bordures aval des cellules de passage (71) sont entourées par un joint.

4. Agencement selon l'une quelconque des revendication 2 à 3, **caractérisé en ce que** la bride de fixation (50) comprend un orifice traversant une paroi d'appui de ladite bride contre la paroi d'admission (12) de la culasse, ledit orifice est en vis-à-vis avec le conduit d'injection de la culasse et apte à loger un injecteur.

5. Agencement selon l'une quelconque des revendications 2 à 4, **caractérisé en ce que** le canal d'admission (17), la cavité dans la culasse (19), la cellule de passage (71) de la bride de fixation, le compartiment longitudinal (81) de l'échangeur forment un conduit d'admission d'air isolé aérauliquement et connecté à une unique chambre à combustion (16).

6. Agencement selon l'une quelconque des revendications 1 à 5, **caractérisé en ce que** le compartiment longitudinal de l'échangeur est prolongé en amont par des parois de bornage (82) entourant l'entrée dudit compartiment (81).

7. Agencement selon la revendication 6, **caractérisé en ce que** lesdites parois de bornage (82) forment une bride d'entrée de l'échangeur fixée contre ledit échangeur.

8. Agencement selon la revendication 6 ou 7, **caractérisé en ce que** les parois de bornage (82) sont partie d'une corne d'entrée (83) d'air d'admission dans l'échangeur (11).

9. Agencement selon l'une quelconque des revendications 6 à 8, **caractérisé en ce que** le canal d'admission (17), la cavité dans la culasse (19), la cellule de passage (71) de la bride de fixation, le compartiment longitudinal (81) de l'échangeur et les parois de bornage (82) forment un conduit d'admission isolé aérauliquement et connecté à une unique chambre à combustion (16).

10. Agencement selon la revendication 5 ou 9, **caractérisé en ce que** la distance entre l'intersection de l'axe du conduit d'injection X2 avec l'axe médian du canal d'admission (17), et l'extrémité amont du conduit d'admission est supérieure à un seuil de longueur.

## Patentansprüche

1. Anordnung zur Befestigung des Luftansaugkreislaufs eines Verbrennungsmotors mit indirekter Kraftstoffeinspritzung, der einen Zylinderkopf (15) umfasst, in den Ansaugkanäle (17) gebohrt sind, die auf einer Seite in eine Vertiefung (20) der Ansaugwand (12) des Zylinderkopfs und auf der gegenüberliegenden Seite in eine Brennkammer (16) münden, die durch einen Zylinder, einen Kolben und die untere Wand des Zylinderkopfs begrenzt ist, wobei der Zylinderkopf mindestens eine Einspritzleitung pro Zylinder umfasst, die dazu geeignet ist, eine Kraftstoffeinspritzeinrichtung aufzunehmen, und schräg in einen Ansaugkanal (17) mündet,
wobei der Ansaugkreislauf einen Wärmetauscher (11) umfasst, der an der Ansaugwand des Zylinderkopfs befestigt ist,
**dadurch gekennzeichnet, dass** die Vertiefung (20) des Zylinderkopfs durch mindestens eine Trennwand (18), die einstückig mit dem Zylinderkopf (15) ausgebildet ist und sich von der Vertiefungsfläche zur Außenseite des Zylinderkopfs erstreckt, in Hohlräume (19) unterteilt ist, so dass eine Brennkammer (16) mit einem einzelnen Hohlraum (19) in Verbindung steht, und dass der Wärmetauscher in Längskammern (81) unterteilt ist, wobei jede der Kammern in der axialen Verlängerung der Kammer mit einem einzelnen Hohlraum (19) des Zylinderkopfs verbunden ist.

2. Anordnung nach Anspruch 1, **dadurch gekennzeichnet, dass** der Wärmetauscher (11) am Zylinderkopf durch einen Befestigungsflansch (50) befestigt ist, der einen Luftdurchgangsabschnitt aufweist, der durch eine obere Wand (59) und eine untere Wand (58) begrenzt ist, die durch Seitenwände (60) miteinander verbunden sind, die im Wesentlichen senkrecht zur oberen und zur unteren Wand verlaufen, und der in Durchgangszellen (71) unterteilt ist, wobei jede der Zellen eine einzelne Längskammer (81) des Wärmetauschers mit einem einzelnen Hohlraum (19) des Zylinderkopfs verbindet.

3. Anordnung nach Anspruch 2, **dadurch gekennzeichnet, dass** die stromaufwärtigen Ränder und die stromabwärtigen Ränder der Durchgangszellen (71) von einer Dichtung umgeben sind.

4. Anordnung nach einem der Ansprüche 2 bis 3, **dadurch gekennzeichnet, dass** der Befestigungsflansch (50) eine Öffnung umfasst, die eine Stützwand des Flanschs gegen die Ansaugwand (12) des Zylinderkopfs durchdringt, wobei die Öffnung der Einspritzleitung des Zylinderkopfs gegenüberliegt und dazu in der Lage ist, eine Einspritzeinrichtung aufzunehmen.

5. Anordnung nach einem der Ansprüche 2 bis 4, **dadurch gekennzeichnet, dass** der Ansaugkanal (17), der Hohlraum im Zylinderkopf (19), die Durchgangszelle (71) des Befestigungsflanschs und die Längskammer (81) des Wärmetauschers eine lufttechnisch isolierte und mit einer einzelnen Brennkammer (16) verbundene Luftansaugleitung bilden.

6. Anordnung nach einem der Ansprüche 1 bis 5, **dadurch gekennzeichnet, dass** die Längskammer des Wärmetauschers stromaufwärts durch Begrenzungswände (82), die den Eingang der Kammer (81) umgeben, verlängert ist.

7. Anordnung nach Anspruch 6, **dadurch gekennzeichnet, dass** die Begrenzungswände (82) einen Wärmetauschereinlassflansch bilden, der am Wärmetauscher befestigt ist.

8. Anordnung nach Anspruch 6 oder 7, **dadurch gekennzeichnet, dass** die Begrenzungswände (82) Teil eines Einlasshorns (83) für Ansaugluft in den Wärmetauscher (11) sind.

9. Anordnung nach einem der Ansprüche 6 bis 8, **dadurch gekennzeichnet, dass** der Ansaugkanal (17), der Hohlraum im Zylinderkopf (19), die Durchgangszelle (71) des Befestigungsflanschs, die Längskammer (81) des Wärmetauschers und die Begrenzungswände (82) eine lufttechnisch isolierte und mit einer einzelnen Brennkammer (16) verbundene Ansaugleitung bilden.

10. Anordnung nach Anspruch 5 oder 9, **dadurch gekennzeichnet, dass** der Abstand zwischen dem Schnittpunkt der Achse X2 der Einspritzleitung mit der Mittelachse des Ansaugkanals (17) und dem stromaufwärtigen Ende der Ansaugleitung größer als ein Längenschwellenwert ist.

## Claims

1. Arrangement for fixing an air intake circuit of an indirect fuel injection combustion engine comprising a cylinder head (15) in which there have been bored intake runners (17) which open at one end into a recess (20) in the intake wall (12) of the cylinder head and, at the opposite end, into a combustion chamber (16) delimited by a cylinder, a piston, and the underside wall of the cylinder head, said cylinder head comprising at least one injection duct per cylinder able to house a fuel injector and opening obliquely into an intake runner (17),
said intake circuit comprising a heat exchanger (11) fixed to the intake wall of the cylinder head,
**characterized in that** the recess (20) in the cylinder head is divided into cavities (19) by at least one dividing wall (18) formed as one with the cylinder head (15) and extending from the recess surface toward the outside of the cylinder head so that a combustion chamber (16) communicates with a single cavity (19), and **in that** the exchanger is divided into longitudinal compartments (81), each of said compartments is connected to a single cavity (19) of the cylinder head in the axial continuation of the compartment.

2. Arrangement according to Claim 1, **characterized in that** the exchanger (11) is fixed to the cylinder head by a fixing flange (50) comprising an air passage section delimited by an upper wall (59) and a lower wall (58) connected to one another by lateral walls (60) substantially orthogonal to said upper and lower walls, and divided into passage cells (71), each of said cells connecting a single longitudinal compartment (81) of the exchanger to a single cavity (19) of the cylinder head.

3. Arrangement according to Claim 2, **characterized in that** the upstream borders and the downstream borders of the passage cells (71) are surrounded by a gasket.

4. Arrangement according to either one of Claims 2 to 3, **characterized in that** the fixing flange (50) comprises a through orifice passing through a wall via which said flange bears against the intake wall (12) of the cylinder head, said orifice facing the injection duct in the cylinder head and being able to house an injector.

5. Arrangement according to any one of Claims 2 to 4, **characterized in that** the intake runner (17), the cavity in the cylinder head (19), the passage cell (71) in the fixing flange, the longitudinal compartment (81) of the exchanger form an air intake duct that is aeraulically isolated and connected to a single combustion chamber (16).

6. Arrangement according to any one of Claims 1 to 5, **characterized in that** the longitudinal compartment of the exchanger is extended upstream by boundary walls (82) surrounding the inlet of said compartment (81) .

7. Arrangement according to Claim 6, **characterized in that** said boundary walls (82) form an exchanger inlet flange fixed against said exchanger.

8. Arrangement according to Claim 6 or 7, **characterized in that** the boundary walls (82) are part of an intake air inlet horn (83) admitting air to the exchanger (11) .

9. Arrangement according to any one of Claims 6 to 8, **characterized in that** the intake runner (17), the cavity in the cylinder head (19), the passage cell (71) of the fixing flange, the longitudinal compartment (81) of the exchanger and the boundary walls (82) form an intake duct that is aeraulically isolated and connected to a single combustion chamber (16).

10. Arrangement according to Claim 5 or 9, **characterized in that** the distance between the intersection of the axis of the injection duct X2 with the midline axis of the intake runner (17), and the upstream end of the intake duct is greater than a threshold length.
